Europäisches Patentamt

European Patent Office

Office européen des brevets

(19)

(11) **EP 0 669 577 B1**

(12) **EUROPÄISCHE PATENTSCHRIFT**

(45) Veröffentlichungstag und Bekanntmachung des Hinweises auf die Patenterteilung:
**30.07.1997 Patentblatt 1997/31**

(51) Int Cl.⁶: **G06F 11/27**

(21) Anmeldenummer: **95102014.8**

(22) Anmeldetag: **14.02.1995**

(54) **Verfahren zum Bewerkstelligen eines Laufzeitfehler-erkennenden-Selbsttests für einen digitalen Schaltkreis**

Method for running self-test to detect delay faults for a digital circuit

Procédé pour la mise en oeuvre d'un autotest pour la détection de défauts de délai pour un circuit digital

(84) Benannte Vertragsstaaten:
**AT BE CH DE FR GB IT LI NL**

(30) Priorität: **25.02.1994 DE 4406271**

(43) Veröffentlichungstag der Anmeldung:
**30.08.1995 Patentblatt 1995/35**

(73) Patentinhaber: **Siemens Nixdorf Informationssysteme AG 33106 Paderborn (DE)**

(72) Erfinder:
- **Vuksic, Anton, Dipl.-Ing. D-81739 München (DE)**
- **Fuchs, Karl, Dr. rer. nat. D-84095 Furth (DE)**

(74) Vertreter: **Fuchs, Franz-Josef, Dr.-Ing. et al Postfach 22 13 17 80503 München (DE)**

(56) Entgegenhaltungen:
**DE-C- 4 102 726**

- **PROCEEDINGS OF THE INTERNATIONAL TEST CONFERENCE, NASHVILLE, 1991 , 1991 INSTITUTE OF ELECTRICAL AND ELECTRONICS ENGINEERS, Seiten 704-711, XP 000272308 KIYOSHI FURUYA ET AL 'TWO-PATTERN TEST CAPABILITIES OF AUTONOMOUS TPG CIRCUITS'**
- **INTERNATIONAL TEST CONFERENCE 1979, DIGEST OF PAPERS, 23.Oktober 1979 - 25.Oktober 1979 CHERRY HILL; IEEE, Seiten 37-41, B. KÖNEMANN ET AL. 'Built-in logic block observation techniques'**

## Beschreibung

Die Erfindung betrifft ein Verfahren zum Bewerkstelligen eines Laufzeitfehler-erkennenden-Selbsttests für einen digitalen Schaltkreis gemäß dem Oberbegriff des Anspruchs 1.

Oft wird eine Schaltkreis-Selbsttest-Methode, abgekürzt BIST (Built-in self test), verwendet, um die Testproblematik in hochintegrierten Schaltkreisen, sogenannten VLSI-Schaltkreisen, zu lösen. Die Schaltkreise können dabei in einer sogenannten Pipelinestrukur mit einer sogenannten Built-In Logik Block-Observer(BILBO)-Architektur angeordnet sein. Eine derartige Pipelinestruktur mit BILBO-Architektur ist beispielsweise aus M. Gerner, B. Müller, G. Sandweg, Selbsttest digitaler Schaltungen, Oldenbourg-Verlag, 1990, Seiten 166 und 167 bekannt. Der Aufbau eines BILBO ist beispielsweise aus der angegebenen Literatur, Seite 159 bekannt.

Ein BILBO kann in vier Funktionsweisen betrieben werden. Je nach Wahl zweier Steuersignale kann die Funktionsweise Testmustergenerator, Schiebemodus, Testantwortauswerter oder Register ausgewählt werden. Als Testmustergenerator wird der BILBO zu einem linear rückgekoppelten Schieberegister (linear feedback shift register), abgekürzt LFSR, zusammengeschaltet. Ein Beispiel ist aus obiger Literatur, Seiten 100 und 101, bekannt. Als Testantwortauswerter wird der BILBO zu einem parallelen Signaturregister (multiple input signature register), abgekürzt MISR, zusammengeschaltet. Ein Beispiel hierfür ist aus obiger Literatur, Seite 147 bekannt.

Zum Testen eines Schaltkreises in einer Pipelinestruktur mit BILBO-Architektur wird nach bekannter Methode der vor dem zu testenden Schaltkreis angeordnete BILBO als LFSR und der dem zu testenden Schaltkreis nachgeschaltete BILBO als MISR betrieben. Das LFSR erzeugt dabei in Abhängigkeit von einem pro Taktschritt sich änderndem Eingangsvektor durch eine jeweilige lineare Abbildung einen jeweiligen Ausgangsvektor, der an den zu testenden Schaltkreis angelegt wird. Der jeweilige Antwortvektor des zu testenden Schaltkreises wird dem nachgeschalteten MISR als Eingangsvektor zugeleitet, der die Antwortvektoren komprimiert und auswertet.

Das LFSR erzeugt mit den entsprechend zugeleiteten Eingangsvektoren entweder wahlfreie oder erschöpfende Testmuster, die an die Eingänge des zu testenden Schaltkreises gelegt werden. Aus der Literatur sind verschiedene BIST-Methoden bekannt, deren Ziel es ist, Testvektorpaare zu erzeugen, die geeignet sind, Laufzeit- und Ständigfehler zu erkennen.

Sogenannte pseudo-erschöpfende Laufzeittests, abgekürzt PETT (Pseudo-exhaustive transition testing), verwenden ein 2n-stufiges LFSR, wie es beispielsweise in C. W. Starke, Built-In Test for CMOS Circuits, IEEE Int. Test Conf., Seiten 309 bis 314, Okt. 1984 beschrieben ist. PETT erzeugt alle möglichen Testmusterpaare für einen n Eingänge aufweisenden Schaltkreis. Hierdurch werden alle testbaren Laufzeitfehler erkannt. Die Testlänge umfaßt jedoch $2^{2n}-1$ Schritte. Zur Verkürzung der Testlänge ist ein pseudo-erschöpfender Test mit Testvektoren der Hamming-Distanz 1, abgekürzt PEAT (Pseudo-exhaustive adjacency testing), entwickelt worden, wie er in G. L. Craig and C. R. Kime, Pseudo-Exhaustive Adjacency Testing: A BIST Approach for Stuck-Open Faults, IEEE Int. Test Conf., Seiten 126 bis 137, Okt. 1985 beschrieben ist. PEAT erzeugt durch sequentielles Invertieren der Bits eines Testmusters alle $n \cdot 2^n$ Vektorpaare mit einer Hamming-Distanz 1 und benötigt hierfür eine Testlänge von ungefähr $(n+1) \cdot 2^n$ Schritten. Es werden aber immer noch 2n Register benötigt.

Aufgabe der Erfindung ist daher, ein Verfahren zum Bewerkstelligen von Laufzeitfehler erkennenden Selbsttests in digitalen Schaltkreisen der eingangs genannten Art anzugeben, für den ein geringerer Hardware-Aufwand benötigt wird.

Diese Aufgabe wird erfindungsgemäß durch die Merkmale des kennzeichnenden Teils des Anspruchs 1 gelöst.

Danach wird in eine n-Bitbreite Pipelinestruktur vor dem zu testenden digitalen Schaltkreis nacheinander maximal alle $2^n$ möglichen verschiedenen, als Eingangsvektor D darstellbaren Eingangsbelegungen für den zu testenden digitalen Schaltkreis eingeführt. Die einzelnen eingeführten Eingangsbelegungen werden jeweils für $2^n-1$ Taktzyklen festgehalten. Unterdessen werden zu jedem dieser Taktzyklen mit einer augenblicklich am zu testenden digitalen Schaltkreis anliegenden Eingangsbelegung $Y^t = (Y_o{}^t, ..., Y_{n-1}{}^t)$ und der festgehaltenen Eingangsbelegung D eine lineare Abbildung gemäß der Beziehung $Y^{t+1} = \mathbf{A} \cdot Y^t + D$ mit $\mathbf{A}$ als eine Übertragungsmatrix mit einem primitiven charakteristischen Polynom, durchgeführt. Aufgrund dieser Operation wird jeweils eine neue augenblicklich gültige Eingangsbelegung für den zu testenden digitalen Schaltkreis erzeugt. Auf diese Weise werden Testmusterpaare erzeugt, die den zu testenden Schaltkreis auf Laufzeitfehler hin, analog zu PETT, erschöpfend testen. Diese Betriebsart kann mittels der dem zu testenden Schaltkreis vorgeschalteten BILBO durchgeführt werden, wodurch dann nur ein n-stufiges LFSR benötigt wird. Gegenüber bisher bekannten Methoden kann dadurch der Hardwareaufwand reduziert werden.

Eine Vorteilhafte Ausgestaltung der Erfindung sind Gegenstand von Unteransprüchen. Danach kann beispielsweise die Testlänge minimiert werden unter Beibehaltung der maximalen Prüfschärfe. Dadurch, daß der Laufzeittest gemäß der Erfindung erschöpfend ist, werden stets auch die durch einen bekannten automatischen Test mit Testmusterpaaren erkannten Fehler erkannt. Besteht nun die Situation, daß wenigstens eine vorgewählte Art von Fehlern erkannt werden soll, können mit einem bekannten automatischen Testmustergenerierungsverfahren diejenigen Testmusterpaare ermittelt werden, die die gewünschten Fehler erkennen. Mit einem Graphenüberdeckungsverfahren können dann aus der Gesamtzahl der verschiedenen Eingangsvektoren des dem zu testenden Schaltkreis vorgeschalteten BILBO ansonsten zugeführten Eingangsvektoren diejenige minimale Anzahl von Eingangsvektoren ausgewählt werden, die jene Testmusterpaare erzeugen, die benötigt werden, um die gewünschten Fehler zu erkennen. Das hat zur Folge, daß die Testdurchführungszeit minimiert wird.

Nachfolgend wird die Erfindung anhand der Zeichnung näher erläutert. Es zeigen

Fig 1 ein Funktionsschaltbild eines bekannten MISR,

Fig 2 ein Blockschaltbild eines bekannten Standard-BILBO,

Fig 3 ein Datenpfad in Pipelinestruktur,

Fig 4 ein UND-Gatter in Verbindung mit einem Schieberegister,

Fig 5 eine kombinatorische Logik, und

Fig 6 eine Minimierungsmethode anhand eines Graphen G.

Um Laufzeitfehler erkennen zu können, werden jeweils zwei Eingangsvektoren <V, W> benötigt. Die jeweiligen Eingangsvektorpaare <V1, W1>, <V2, W2>, ... erzeugen erforderliche Signalübergänge an den Eingängen des zu testenden Schaltkreises. Der Vektor V initialisiert den zu testenden Schaltkreis und der Vektor W erzeugt den Wechsel und sorgt für seine Übertragung zwischen entsprechenden Ein- und Ausgängen. Im Fehlerfall wird eine vorgegebene Laufzeitschranke (maximale Laufzeit) überschritten. Die Vektorpaare, die einen Laufzeitfehler unabhängig von weiteren Laufzeitfehlern erkennen, bilden einen robusten Test. Im Gegensatz dazu können beim nichtrobusten Test die Laufzeitfehler durch Mehrfachfehler maskiert werden.

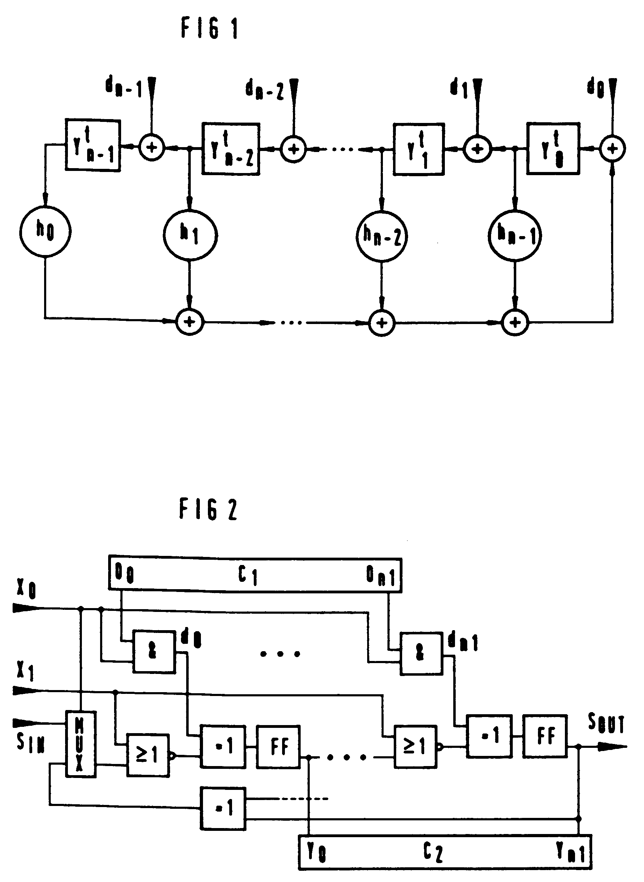

Im folgenden soll ein MISR näher betrachtet werden. Dabei soll unter B={0, 1} und unter Addition eine Modulo-2-Addition verstanden werden. Die Funktion eines MISR, der in der Figur 1 dargestellt ist, kann durch das Gleichungssystem

$$Y^{t+1} = A \cdot Y^t + D$$

beschrieben werden, wobei gilt:

$$Y^t = (Y_0^t, ..., Y_{n-1}^t) \; \varepsilon \; B^n$$

ist ein augenblicklicher Zustand,
$D = (d_o, ..., d_{n-1}) \; \varepsilon \; B^n$ ist ein konstanter Eingangsvektor, und

$$A = \begin{pmatrix} h_{n-1} & \cdots & h_o \\ 1 & 0 & 0...0 & 0 \\ 0 & 1 & 0...0 & 0 \\ & ............... & \\ 0 & 0 & 0...1 & 0 \end{pmatrix} \quad \varepsilon \quad B^{n \times n}$$

ist eine Übertragungsmatrix.
Die Ausgangssequenz des MISR wird beschrieben durch

$$y = (y_k), \text{ mit } k \geq 0.$$

Der MISR ist vollständig beschrieben durch ein zugehöriges charakteristisches Polynom und durch einen Startwert $(y_{-1}, ..., y_{-n})$.
Zwei Fälle sind zu unterscheiden. Ein erster Fall, der dadurch gekennzeichnet ist, daß gilt:

$$D = (0, \ldots, 0),$$

und ein zweiter Fall, der dadurch gekennzeichnet ist, daß gilt:

$$D \neq (0, \ldots, 0).$$

Im ersten Fall ist das charakteristische Polynom beschrieben durch die Gleichung:

$$f_O(x) = 1 + \sum_{i=0}^{n-1} h_i \, x^{n-i}.$$

(H. J. Wunderlich, Hochintegrierte Schaltungen: Prüfgerechter Entwurf und Test, Springer-Verlag, Berlin, 1991). Die maximale Periode eines n-stufigen MISR ist dabei $2^n-1$, wenn gilt: $f_o(x)$ ist primitiv.

Nachfolgend wird ein erstes Theorem angegeben, das besagt, daß für jedes D‡ (0, ..., 0) eine maximale Periode existiert.

Theorem 1: Ist $Y^{t+1} = \mathbf{A} \cdot Y^t + D$ der nächstfolgende gültige Ausgangsvektor eines MISR, wobei gilt: D‡(0, ..., 0), dann hat der MISR eine maximale Periode, wenn sein charakteristisches Polynom $f_o(x)$ primitiv ist.

Das Theorem 1 kann mathematisch bewiesen werden. Der Beweis soll aber an dieser Stelle nicht durchgeführt werden.

Es kann aber eine Definition angegeben werden, die lautet: Mit $f_o(x)$ primitiv, bezeichnet $S_D$ eine maximale Sequenzlänge (maximal length sequence), abgekürzt MLS, und $I_D$ einen invariablen Zustand, in dem gilt: $\mathbf{A} \cdot I_D + D = I_D$.

Zu beachten ist, daß der invariable Zustand $I_D$ unterschiedlich ist für jedes $D \in B^n$. Letzteres folgt direkt aus der Gleichung: $\mathbf{A} \cdot I_D + D = I_D \wedge \mathbf{A} \cdot I_D + D' = I_D \Rightarrow D = D'$.

Nachfolgend wird ein zweites Theorem angegeben, das besagt, daß keine zwei verschiedene Eingangsvektoren an dem besagten MISR angelegt werden können, die zu irgendeinem Zeitpunkt gleiche Testmusterpaare erzeugen.

Theorem 2: Sind D, D'$\in B^n$ zwei verschiedene Eingangsvektoren des MISR, dann sind zwei aufeinanderfolgende Vektoren $\langle V, W \rangle$, die Teil von MLS $S_D$ sind, nicht Teil von MLS $S_{D'}$.

Auch dieses Theorem kann mathematisch bewiesen werden. Der Beweis soll aber an dieser Stelle nicht durchgeführt werden.

Figur 2 zeigt ein Standard-BILBO, wie es beispielsweise in B. Koenemann, J. Mucha, G. Zwiehoff, Built-In Logic Block Observation Techniques, IEEE Int. Test Conf., Seiten 37 bis 41, Okt. 1979 und T. W. Williams , K. P. Parker, Design for Testability - A Survey, IEEE Trans. on CAD, Vol. c-31, No. 1, Seiten 2 bis 15, Jan. 1982 beschrieben ist.

Im Testmustergenerierungsmodus (test pattern generation mode), abgekürzt TPG, der im angegebenen Ausführungsbeispiel durch die Steuersignale ($X_0 = 1$, $X_1 = 0$) eingestellt wird, nehmen die Werte der POs von $C_1$ die Aufgabe wahr, die Eingänge des MISR anzusteuern. Jeder Ausgangsvektor von $C_1$ erzeugt einen Eingangsvektor D. Im optimalen Fall gibt es $2^n$ Eingangsvektoren. Aufgrund der Theoreme 1 und 2 wird ein erschöpfender Test mit Testmusterpaaren erzeugt.

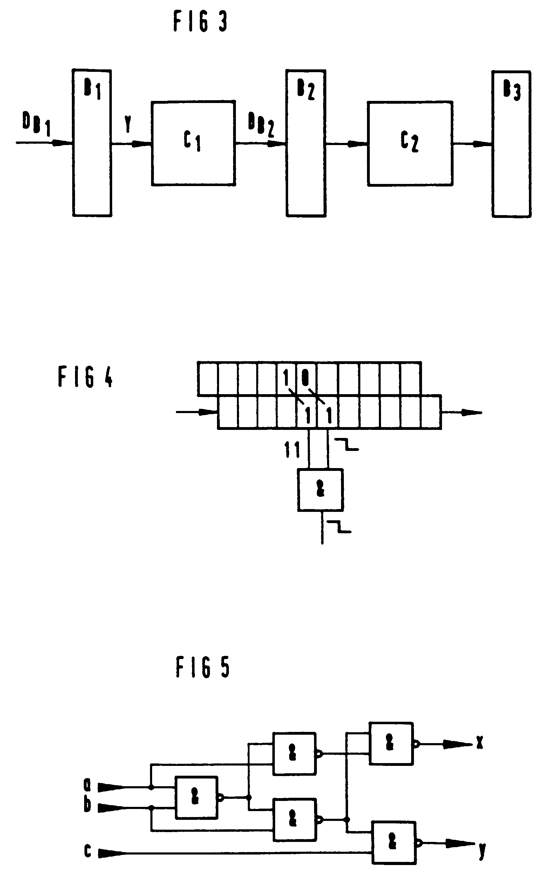

Nachfolgend werden drei BIST-Methoden für die Erkennung von Laufzeitfehlern näher beschrieben. Für die Erklärung der Prinzipien wird ein Datenpfad in Pipelinestruktur herangezogen, wie er in der Figur 3 gezeigt ist. Zu sehen sind drei BILBO $B_1$, $B_2$, $B_3$ und zwei Blöcke $C_1$, $C_2$ mit jeweils einer kombinatorischen Logik. Der Block $C_2$ beinhaltet den zu testenden Schaltkreis.

Bei der ersten BIST-Methode sei die maximale Anzahl von Eingangskombinationen verwendet. Dabei werden $B_1$ und $B_2$ als Testmustergenerator und $B_3$ als MISR verwendet. Der Eingangsvektor von $B_1$ sei mit $D_{B1}=(0, \ldots,0)$ festgelegt. $B_1$ erzeugt dann $2^n-1$ Vektoren, die durch $C_1$ an $B_2$ als Eingangsvektoren angelegt werden. Für jeden Eingangsvektor $D_{B2}$ erzeugt $B_2$ $2^n-1$ Testmuster, wenn $B_1$ und $B_2$ jeweils mit einem eigenen Takt betrieben werden. Weist der Takt für $B_2$ eine Taktperiode $T_2$ auf, muß der Takt für $B_1$ eine Taktperiode $T_1=T_2 \cdot (2^n-1)$ aufweisen. Alternativ können $B_1$ und $B_2$ einen gemeinsamen Takt aufweisen, wenn $D_{B2}$ für $2^n-1$ Taktzyklen konstant gehalten wird. Um dies bewerkstelligen zu können ist ein zusätzlicher Modus nötig, in dem die Registerinhalte festgehalten werden können. Angemerkt ist, daß $C_1$ festlegt, welche von den möglichen $2^n$ Testmustern an die Eingänge von $B_2$ gelangen.

Bei der zweiten BIST-Methode werden eine reduzierte Anzahl von Eingangsvektoren verwendet. Die Testlänge kann dadurch reduziert werden. Als Basis dienen Testmusterpaare, die deterministisch erzeugt werden. Weiter unten ist eine Methode beschrieben, durch die alle Testmusterpaare mit einer minimalen Anzahl von MLS's überdeckt werden. Ein entsprechender Eingangsvektor $D_{B2}$ muß dann unter Verwendung einer automatischen Testmustergenerierung (automatic test pattern generation), abgekürzt ATPG, durch $C_1$ (Figur 3) festgelegt werden. Abschließend wird jeder Ergebnisvektor Y sequentiell in $B_1$ geladen und für $2^n-1$ Taktzyklen festgehalten.

Bei der dritten BIST-Methode werden zwei Eingangsvektoren ausgewählt. Werden für $B_2$ die Eingangsvektoren $D_{B2} = (0, ...,0)$ und $D_{B2} = (1, ...,1)$ verwendet, werden alle einzelnen Bits entweder geschoben oder geschoben und invertiert. In vielen Fällen erlaubt diese Auswahl eine hohe nicht robuste Fehlererkennung. Am Beispiel eines UND-Gatters, wie es in der Figur 4 dargestellt ist, kann dieser Sachverhalt verdeutlicht werden. Die benötigten Testmusterpaare $\langle 11, 10 \rangle$ und $\langle 01, 11 \rangle$ können durch Verwenden lediglich eines Schieberegisters nicht erzeugt werden. Durch Schieben und Invertieren können diese aber erzeugt werden.

Für die nachfolgende Beschreibung sei angenommen, daß $M_{test}$ eine Sammlung von deterministisch gebildeten Testmusterpaaren $\langle V, W \rangle$ ist. Im allgemeinen beinhalten V und W unbestimmte Werte, das heißt, $V, W \in \{0, 1, X\}^n$. Sind V und W vollständig definierte Vektoren (Minterme) besteht eine Beziehung der Art: $W = A \cdot V + D$, die dafür herangezogen werden kann, zu entscheiden, ob $\langle V, W \rangle$ in einer MLS $S_D$ enthalten ist. Eine allgemeine Betrachtungsweise ist für teilweise definierte Vektoren notwendig.

Hierzu wird folgendes definiert. Es soll gelten:

$$\cap : \{0,1,X\}^{n2} \rightarrow \{0,1,X,\emptyset\}^n,$$

wobei die Operatoren für jede Komponente in folgender Weise festgelegt sind:

| $\cap$ | 0 | 1 | X |
|---|---|---|---|
| 0 | 0 | $\emptyset$ | 0 |
| 1 | $\emptyset$ | 1 | 1 |
| X | 0 | 1 | X |

Ferner soll gelten: $V_1, V_2 \varepsilon \{0,1,X\}^n$ seien zwei Vektoren. $V_1$ wird von $V_2$ überdeckt (symbolisch dargestellt: $V_1 \subseteq V_2$), wenn $V_1 \cap V_2 = V_1$.

Weiter wird definiert, daß $V, W \varepsilon \{0,1,X\}^n$ zwei Vektoren seien. Das Vektorpaar $\langle V,W \rangle$ ist in der MLS $S_D$ enthalten (symbolisch dargestellt: $(V,W) \varepsilon_{seq} S_D$), wenn die unbestimmten Werte von V und W derart mit 0 oder 1 festgelegt werden können, so daß V und W zwei aufeinanderfolgende Vektoren von $S_D$ sind. Das heißt, es gilt:

$$\exists_{M_V \in B^n} \quad M_V \subseteq V \wedge A \cdot M_V + D \subseteq W.$$

Anzumerken ist, daß die zweite Bedingung der zuletzt angegebenen Formel nicht erfüllt ist, wenn $M_v \subseteq V$ der invariable Zustand ist. In diesem Fall gilt wegen

$$M_V \subseteq V \Rightarrow M_V \nsubseteq W$$

die Formel

$$A \cdot M_V + D = M_V \nsubseteq W .$$

Dieser Sachverhalt folgt aus dem Umstand, daß wenigstens ein Bit 0(1) in V und 1(0) in W sein muß, um einen positiven oder negativen Übergang zu erzeugen.

Ein teilweise bestimmtes Testmusterpaar kann in verschiedenen MLS's $S_D$ auftreten, aber ein Minterm Testmusterpaar kann nur in einem MLS $S_D$ auftreten (vgl. Theorem 2). Das Problem, das jetzt besteht, ist das Ermitteln eines minimalen Satzes

$$D = \{D_1,...,D_m\}$$

von MISR-Eingangsvektoren derart, daß jedes Testmusterpaar wenigstens in einem MLS $S_D$ enthalten ist.

Das erwähnte Problem kann in ein Überdeckungsproblem im Zusammenhang mit einem ungerichteten Graphen $G=(M_{test}, E)$ übergeführt werden, wobei E einen Satz Kanten darstellt. Jeder Knoten korrespondiert mit einem Testmusterpaar. Zwischen zwei Testmusterpaaren $\langle V, W \rangle$ und $\langle V', W' \rangle$ ist eine Kante, wenn gilt:

$$\underset{D \in B^n}{\exists} \quad \langle V, W \rangle \; \varepsilon_{seq} \; S_D \wedge \langle V', W' \rangle \; \varepsilon_{seq} \; S_D$$

das heiß, $\langle V, W \rangle$ und $\langle V', W' \rangle$ sind beide in der gleichen MLS $S_D$. Das Bestimmen eines minimalen Satzes von Eingangsvektoren ist dann equivalent mit dem Bestimmen einer minimalen Anzahl von Gruppen $Cl_1$, ..., $Cl_m$ (Cl: Cliques) jeweils miteinander in Beziehung stehender Knoten (kompletter Subgraph), die G überdecken. Jede Gruppe $Cl_i$ verkörpert solche Testmusterpaare von $M_{test}$, die im optimalen Fall mit dem gleichen Eingangsvektor $D_i$ erzeugt werden können. Da dieses Überdeckungsproblem im allgemeinen NP-vollständig ist (M. R. Garey, D. S. Johnson, Computers and Intractability, **W.** H. Freeman and Company, New York, 1979), müssen heuristische Methoden angewandt werden.

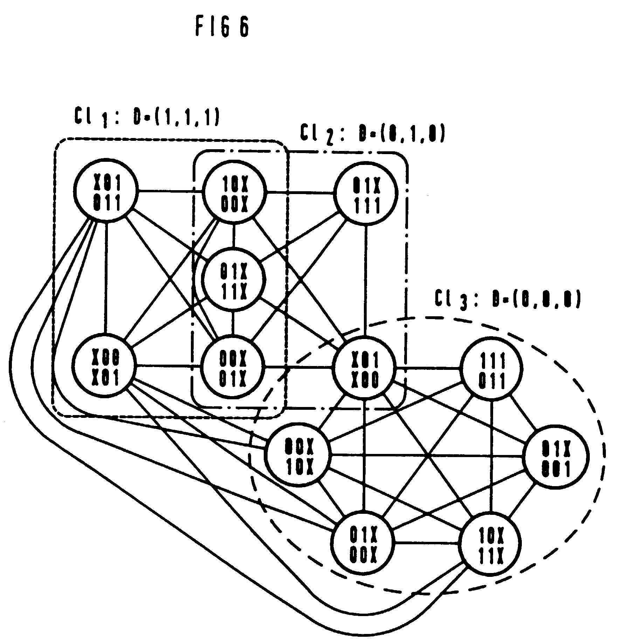

Anhand der in der Figur 5 dargestellten kombinatorischen Logik und einem Laufzeitfehlermodell gemäß G. L. Smith, Model for Delay Faults Based upon Paths, IEEE Int. Test Conf., Seiten 342 bis 349, Sept. 1985, wird das Überdeckungsverfahren näher erläutert. Die kombinatorische Logik hat 10 Datenpfade von den Eingängen a, b, c zu den Ausgängen x, y. Entsprechend der zwei möglichen Übergänge (positiv, negativ) an den Eingängen sind 20 Laufzeitfehler möglich. Von diesen 20 Laufzeitfehlern sind 12 robust und 8 nicht robust testbar. Da die kombinatorische Logik drei Eingänge aufweist, ist ein drei-stufiges MISR notwendig, das ein charakteristischen Polynom der Art: $f_0(x)$ $=x^3 \oplus x \oplus 1$ aufweist, um die Testmusterpaare zu erzeugen. Das angegebene charakteristische Polynom ist primitiv und es gibt $2^3$ mögliche Eingangsvektoren.

Figur 6 zeigt einen Graphen $G=(M_{test}, E)$ für 12 deterministisch erzeugte Testmusterpaare. Zum Beispiel wird die MLS 001, 011, 010, 110, 000, 111, 100, 001 von dem MISR mit den Eingangsvektoren (1, 1, 1) erzeugt. Der Graph G weist eine Kante zwischen $\langle X01, 011 \rangle$ und $\langle 10X, 00X \rangle$ auf, da beide Vektorpaare in dieser Sequenz enthalten sind bei einer zweckmäßigen Belegung der unbestimmten Werte. Wenigstens drei Gruppen $Cl_1$, $Cl_2$, $Cl_3$ sind notwendig, um den Graph G zu überdecken. Als Folge davon sind drei Eingangsvektoren D=(1,1,1), D=(0, 1, 0) und D=(0, 0, 0) notwendig, um alle 12 Testmusterpaare zu erzeugen.

## Patentansprüche

1. Verfahren zum Bewerkstelligen eines Laufzeitfehler-erkennenden-Selbsttests für einen digitalen Schaltkreis innerhalb einer n Bit breiten Pipelinestruktur mit BILBO-Architektur, bei welchem für den zu testenden digitalen Schaltkreis Testmusterpaare mit der Eigenschaft, in Summe einem pseudo-erschöpfenden Testmusterpaar-Test anzugehören, erzeugt und an die Eingänge des zu testenden digitalen Schaltkreises geführt werden, **dadurch gekennzeichnet,** daß in die Pipelinestruktur vor dem zu testenden digitalen Schaltkreis (z.B. $C_2$) nacheinander maximal alle $2^n$ möglichen verschiedenen, als Eingangsvektor D darstellbaren Eingangsbelegungen für den zu testenden digitalen Schaltkreis eingeführt werden, und daß jede dieser Eingangsbelegungen für $2^n-1$ Taktzyklen festgehalten wird, währenddessen zu jedem dieser Taktzyklen mit einer augenblicklich am zu testenden digitalen Schaltkreis anliegenden Eingangsbelegung $Y^t=(Y_o{}^t, ..., Y_{n-1}{}^t)$ und der festgehaltenen Eingangsbelegung D eine lineare Abbildung gemäß der Beziehung $Y^{t+1}=A \cdot Y^t+D$, mit **A** als eine Übertragungsmatrix mit einem primitiven charakteristischen Polynom, zum Erzeugen jeweils einer neuen augenblicklich gültigen Eingangsbelegung für den zu testenden digitalen Schaltkreis durchgeführt wird.

2. Verfahren nach Anspruch 1, **dadurch gekennzeichnet,** daß die Erzeugung der jeweils augenblicklich gültigen Eingangsbelegung für den zu testenden digitalen Schaltkreis (z.B. $C_2$) durch einen unmittelbar dem zu testenden digitalen Schaltkreis vorgeschalteten BILBO (z.B. $B_2$) erfolgt, der als paralleles Signaturregister MISR betrieben wird, und daß das Festhalten der in die Pipelinestruktur jeweilig eingeführten Eingangsbelegung D für den zu testenden Schaltkreis (z.B. $C_2$) durch einen dem zur Erzeugung der augenblicklich gültigen Eingangsbelegung für den zu testenden Schaltkreis (z.B. $C_2$) zuständigen BILBO (z.B. $B_2$) vorliegenden BILBO (z.B. $B_1$) erfolgt, wobei den betreffenden BILBO (z.B. $B_1$, $B_2$) jeweils ein unterschiedlicher Taktzyklus (z.B. $T_1$, $T_2$) zugeordnet ist, die zueinander gemäß der Formel $T_1=T_2 \cdot (2^n-1)$ in Beziehung stehen.

3. Verfahren nach Anspruch 1 oder 2, **dadurch gekennzeichnet,**
daß in Bezug auf die erzeugten Testmusterpaare eines automatischen Testmustererzeugungs-Tests aus den $2^n$ möglichen verschiedenen Eingangsbelegungen D mit Hilfe einer Auswahlmethode diejenigen Eingangsbelegungen D für die Einführung in die Pipelinestruktur ausgewählt werden, die als augenblicklich gültige Eingangsbelegungen für den zu testenden Schaltkreis (z.B. $C_2$) die gleichen Testmusterpaare wie die Testmusterpaare des automatischen Testmustererzeugungs-Tests erzeugt.

## Claims

1. Method for providing a self-test for detecting time-outs for a digital circuit inside an n-bit-wide pipeline structure having BILBO architecture, in which for the digital circuit to be tested test pattern pairs which have the property of belonging in sum to a pseudo-exhausting test pattern pair test are generated and fed to the inputs of the digital circuit to be tested, characterized in that a maximum of all $2^n$ possible different input configurations, which can be represented as an input vector D, for the digital circuit to be tested are introduced sequentially into the pipeline structure upstream of the digital circuit (for example $C_2$) to be tested, and in that each of these input configurations is retained for $2^n$-1 clock cycles, while in each of these clock cycles with an input configuration $Y^t = (Y_{0t}, ..., Y_n-1^t)$ instantaneously present at the digital circuit to be tested and with the retained input configuration D, linear mapping is carried out in accordance with the relationship $Y^{t+1} = \mathbf{A} \cdot Y^t + D$, $\mathbf{A}$ being a transfer matrix with a primitive characteristic polynomial, for the purpose of generating in each case a new instantaneously valid input configuration for the digital circuit to be tested.

2. Method according to Claim 1, characterized in that the generation of the respectively instantaneously valid input configuration for the digital circuit (for example $C_2$) to be tested is performed by a BILBO (for example $B_2$) which is connected immediately upstream of the digital circuit to be tested and is operated as a parallel signature register MISR, and in that the input configuration D, respectively introduced into the pipeline structure, for the circuit (for example $C_2$) to be tested is retained by a BILBO (for example $B_1$) upstream of the BILBO (for example $B_2$) responsible for generating the instantaneously valid input configuration for the circuit (for example $C_2$) to be tested, the relevant BILBO (for example $B_1$, $B_2$) respectively being assigned a different clock cycle (for example $T_1$, $T_2$) which are related to one another in accordance with the formula $T_1 = T_2 \cdot (2^n-1)$.

3. Method according to Claim 1 or 2, characterized in that with reference to the generated test pattern pairs of an automatic test pattern generating test, for the purpose of introduction into the pipeline structure there are selected from the $2^n$ possible different input configurations D with the aid of the selection method those input configurations D which, as instantaneously valid input configurations for the circuit (for example $C_2$) to be tested, generate the same test pattern pairs as the test pattern pairs of the automatic test pattern generating test.

## Revendications

1. Procédé pour la mise en oeuvre d'un autotest pour la détection de défauts de délai pour un circuit digital à l'intérieur d'une structure pipeline d'une largeur de n bits avec architecture BILBO, dans lequel, des paires de combinaisons binaires de test, présentant la particularité d'appartenir en totalité à un test par paires de combinaisons binaires de test pseudo-exhaustif, sont générées pour le circuit digital à tester, et sont amenées aux entrées du circuit digital à tester.
caractérisé en ce que
dans la structure pipeline, et en amont du circuit digital à tester (par ex. $C_2$), tout au plus toutes les $2^n$ configurations d'entrée différentes possibles pour le circuit digital à tester, qui peuvent être représentées en tant que vecteur d'entrée D, sont acheminées les unes après les autres dans la structure pipeline en amont du circuit digital à tester et en ce que chacune de ces configurations d'entrée est maintenue pendant 2n-1 cycles, pendant que, à chacun de ces cycles, avec une configuration d'entrée présente à cet instant sur le circuit digital à tester $Y^t=(Y_o^t, ..., Y_{n-1}^t)$ et la configuration d'entrée D maintenue, une représentation linéaire selon le rapport $Y^{t+1} = \mathbf{A} \cdot Y^t + D$, $\mathbf{A}$ étant une matrice de transmission avec un polynôme caractéristique primitif, est exécutée pour générer respectivement une nouvelle configuration d'entrée valable à cet instant pour le circuit digital à tester.

2. Procédé selon la revendication 1, caractérisé en ce que,
la génération de la configuration d'entrée respectivement valable à cet instant pour le circuit digital à tester (par ex. $C_2$) s'effectue par l'intermédiaire d'un BILBO monté directement en amont du circuit digital à tester (par ex.

$B_2$), qui fonctionne en tant que registre de signature parallèle MISR, et en ce que le maintien de la configuration d'entrée D introduite respectivement dans la structure pipeline pour le circuit à tester (par ex. $C_2$) s'effectue par l'intermédiaire d'un BILBO (par ex. $B_1$) placé avant le BILBO (par ex. $B_2$) compétent pour la génération d'une configuration d'entrée valable à cet instant pour le circuit à tester (par ex. $C_2$), où respectivement un cycle différent (par ex. $T_1$, $T_2$) est asservi aux BILBO concernés, qui sont en rapport l'un avec l'autre selon la formule $T_1 = T_2 \cdot (2^n - 1)$.

3. Procédé selon la revendication 1 ou 2 caractérisé en ce que,
   en ce qui concerne les paires de combinaisons binaires de test générées par un test automatique de génération de combinaisons binaires de test, parmi le nombre $2^n$ de configurations d'entrées D différentes possibles, seules sont sélectionnées, à l'aide d'une méthode de sélection, pour l'introduction dans la structure pipeline, les configurations d'entrées D qui génèrent en tant que configurations d'entrées valables à cet instant pour le circuit à tester (par ex. $C_2$) les mêmes paires de combinaisons binaires de test que les paires de combinaisons binaires de test du test automatique de génération de combinaisons binaires de test.

FIG 1

FIG 2

FIG 3

FIG 4

FIG 5

FIG 6